# EUROPEAN PATENT SPECIFICATION

(11) **EP 1 612 393 B1**
(45) Date of publication and mention of the grant of the patent: **28.04.2010**
(21) Application number: 04015279.5
(22) Date of filing: 30.06.2004
(51) Int. Cl.: F02D 41/36, F02D 17/02, F02D 13/06, F02D 41/14

(54) **Method and system for operating a four-stroke multi-cylinder spark ignition combustion engine with cylinder deactivation**
Verfahren und Vorrichtung zum Betreiben einer mehrzylindrigen fremdgezündeten Viertakt-Brennkraftmaschine mit Zylinderabschaltung
Méthode et dispositif pour faire fonctionner un moteur multicylindre à quatre-temps à allumage commandé avec désactivation des cylindres

(43) Date of publication of application: 04.01.2006
(73) Proprietor: Ford Global Technologies, LLC, Dearborn, MI 48126 (US)
(72) Inventor: Almkvist, Göran, 443 31 Lerum (SE); Lallevaag, Lars, 416 63 Göteborg (SE); Haakansson, Henrik, 418 40 Göteborg (SE); Burgdorf, Klas, 459 91 Ljungskile (SE)
(74) Representative: Petri, Stellan

(56) References cited:
- EP-A- 1 054 148
- US-A- 5 337 720
- US-A- 5 492 100
- US-A- 5 562 086
- US-A1- 2003 062 019
- US-B1- 6 615 776
- PATENT ABSTRACTS OF JAPAN vol. 1998, no. 11, 30 September 1998 (1998-09-30) & JP 10 169478 A (TOYODA MACH WORKS LTD), 23 June 1998 (1998-06-23)

## Description

### Field of the invention

The present invention relates to a method for reducing the part load fuel consumption for a multi-cylinder spark ignition combustion engine. In these types of engines, the cylinders are divided into at least two subgroups, all of which are not operated at low torque.

The present invention also relates to a system for implementing the above-described method.

### Technical background

During the last decades, there has been a strive towards more fuel-efficient spark ignition (SI) engines, e.g. for use in automobiles. Many ways of reducing the fuel consumption have been proposed, e.g. turbo-charging of small-displacement engines, direct injection and lean-burn engines. Customers are, however, reluctant to accept these ideas for reducing fuel consumption, especially in the US, where engine size (displacement) is still an important sales argument.

There is, however, a large drawback with large-displacement SI engines: at low torque, the engine output is controlled by reducing the pressure of the air entering the engine cylinders. This leads to a parasitic loss, since the inlet air is expanded over the throttle without performing any useful work. This parasitic loss is usually referred to as pumping loss, and it increases with lower inlet pressure. If the engine displacement is large (powerful engine), the inlet pressure has to be even lower. This influences fuel consumption significantly, since part load is the most common working condition for a car engine.

Most modern cars have an engine output of 100-200 horsepower (75-150 kW), enabling a top speed in the range of 200-250 km/h. Such a high velocity is, however, very seldom feasible due to traffic conditions and legislation. For a full size car running on a straight, level highway with a velocity of 100 km/h, the power requirement is about 20 horsepower (14,5 kW). This is in most cases merely a fraction of the maximum engine power. This implies that the cars of today are heavily overpowered. This is not necessarily true, however, since not all highways are level and it is sometimes necessary to accelerate the car rapidly. Furthermore, high engine power is a customer requirement and the customers are willing to pay a higher price for a car equipped with a larger engine.

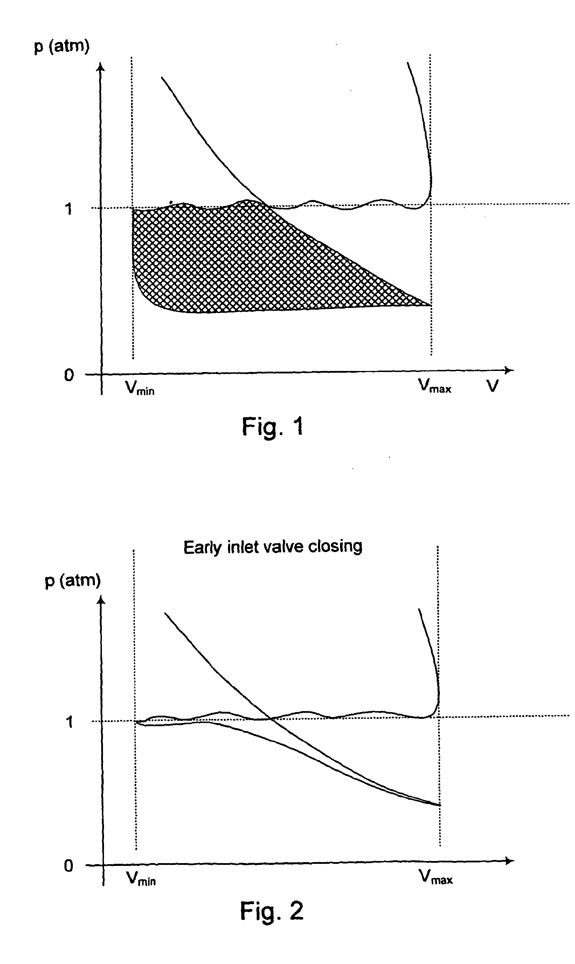

The negative effects of throttling can be seen in a pressure-volume diagram, see Fig. 1. The hatched area is negative work called pumping loss, which is caused by the irreversible expansion work of the intake air over the throttle, as implied above.

One way of reducing the throttling is to operate the engine lean, i.e. with excess air. This approach is, however, limited by environmental legislation. Reduction of engine emissions through catalytic conversion of the exhausts in a three-way catalyst (TWC) requires the engine to run under stoichiometric conditions, i.e. the engine must be supplied with exactly the amount of air that is required for complete combustion of all fuel present in the cylinders. If excess oxygen is present in the exhaust gases, the conversion efficiency of NOₓ is greatly reduced.

Another way of reducing the throttling is to use exhaust gas recirculation (EGR), which simply constitutes recirculated exhaust gas taken from the exhaust manifold which is supplied to the intake manifold. The exhaust gas increases the pressure in the intake manifold and consequently less throttling is induced. If EGR is used, the engine can still be operated under stoichiometric condition, which means that the TWC will operate efficiently. Exhaust gas recirculation also reduces NOₓ formation but it decreases the combustion rate. Hence, only EGR rates of up to 30% are normally possible.

A further strategy for reducing part load fuel consumption is to use variable valve timing (VVT). This feature allows variable opening and closing timings for the inlet and/or exhaust valves in relation to the crankshaft. By increasing the valve overlap, i.e. the period when both the exhaust and inlet valves are open, a large quantity of residual gases can be contained in the cylinders without utilising an EGR system.

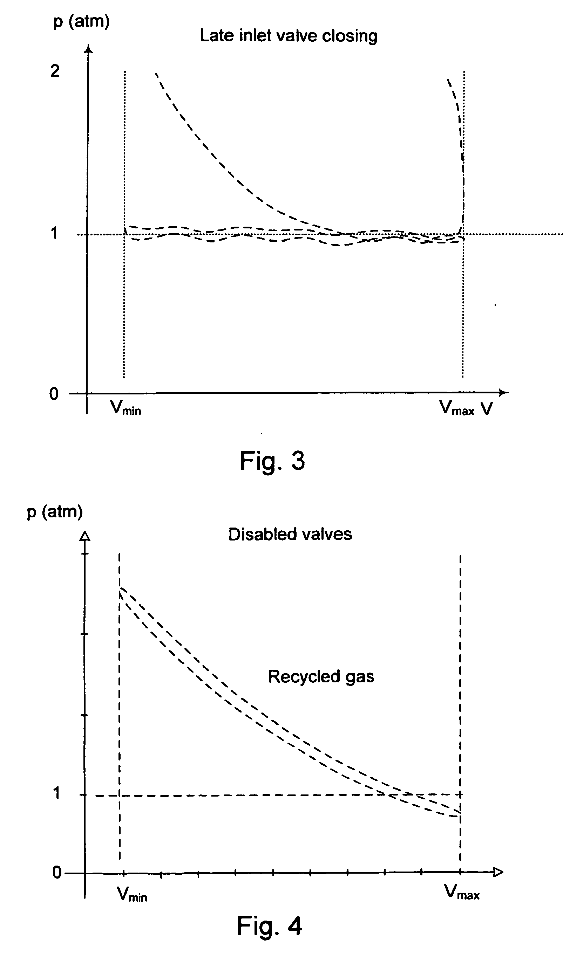

The inlet valve closing timing can also be used for controlling the load. Either early or late inlet valve closing can be used and both methods reduce the pumping losses. With early inlet valve closing, the pressure in the cylinder decreases when the inlet valve is closed during the intake stroke, see Fig. 2. This does not lead to a significant pumping loss, as the pressure during the compression stroke almost follows the same trace (almost isentropic expansion/compression). With late inlet valve closing the pressure in the cylinder does not increase until the inlet valve is closed sometime during the compression stroke, see Fig. 3. The fuel consumption benefits that can be achieved with VVT are, however, quite limited. Normal VVT mechanisms can only vary the valve timing a limited amount, resulting in moderate changes in load. With very late inlet valve closing, there will also be a problem with interference between the still open inlet valve and the piston approaching its top dead center position. Furthermore, using only the valve timing for load control will lead to very low effective compression ratio at low loads. This will decrease the temperature at the time of ignition, which reduces the laminar and turbulent flame speed. A low flame speed leads to unstable and inefficient combustion.

Recently, homogenous charge compression ignition (HCCI, also called activated radical (AR) or ATAC combustion) has gained a large interest within the engine research community. The HCCI concept was first described by Onishi in SAE790501 (technical paper submitted to the Society of Automotive Engineers). This combustion concept relies on a principle wherein a premixed air/fuel mixture is compressed in the engine cylinder until the mixture auto-ignites. This results in a very high rate of heat release, since the auto-ignition takes place simultaneously in the entire cylinder (hence no flame propagation). The concept is interesting as the formation of NOₓ can be very low, and the engine can be run on a very diluted air/fuel mixture, i.e. with excess air or EGR. There are still many problems to be solved, before the concept can be implemented in a passenger car engine, e.g. controlling the combustion during transient operation.

An additional way of reducing part load fuel consumption in SI engines is to deactivate one or more cylinders. There are problems associated with cylinder deactivation, e.g. transitions between full engine operation and operation of only some of the engine cylinders. Furthermore, cylinder deactivation gives rise to increased engine vibrations, since there are fewer working strokes per crankshaft revolution. One further problem with cylinder deactivation is the conversion of emissions in the catalyst(s), e.g. due to the cooling down of the catalyst(s). The advantages and drawbacks of cylinder deactivation will be described in more detail below.

There are several different techniques for deactivating cylinders, e.g. a system (Motortechnische Zeitschrift 61, no 5 and 6) that uses disabling of the inlet and exhaust valves for the deactivated cylinders. This is called lost motion valve control, and essentially works by disabling a hydraulic member acting between the camshaft and the valve. When the valves are disabled, the gas in the cylinder is expanded to a very low pressure, and is consequently compressed during the compression stroke (the expansion and exhaust strokes function in the same manner), see the pressure-volume diagram in Fig. 4. This only leads to minor losses caused by heat transfer to the cylinder walls. The drawback with lost motion valve control, with disabling of the inlet and exhaust valves, concerns torque balancing of the engine. The deactivated cylinders do not contribute to the total torque from the engine, but rather counteract the other cylinders. The expansion of the gas during the expansion stroke leads to a negative rather than positive contribution to the total torque and, hence, leads to larger variations in the torque outputted from the engine. This is especially critical at low engine speeds.

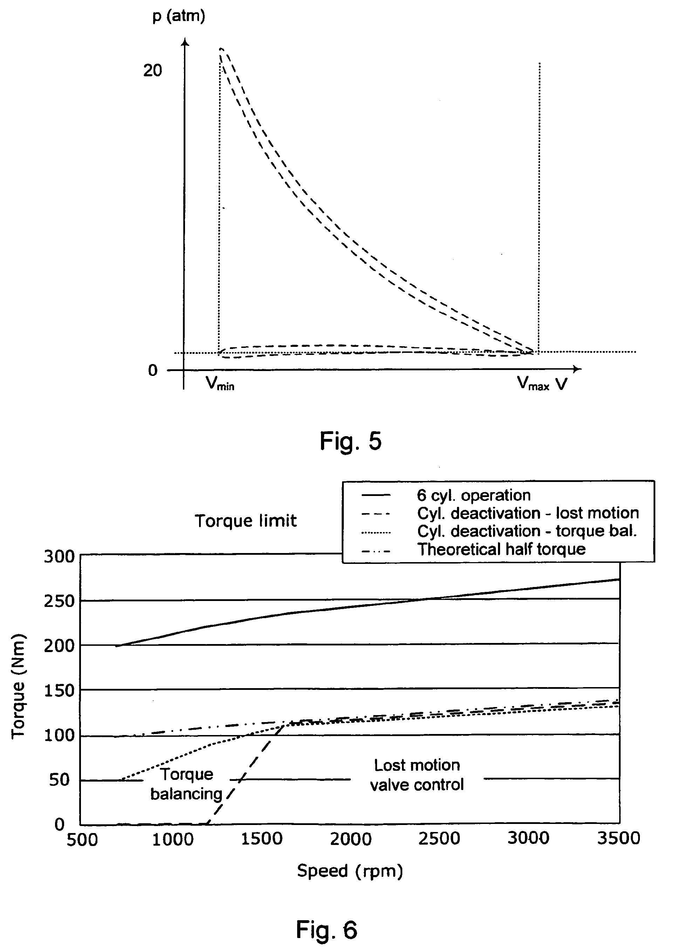

A concept for reducing engine vibration during cylinder-deactivated mode is described in US-A-5 562 086. This document discloses a device for making transitions between full engine operation and cylinder-deactivated mode, where the deactivated cylinders pump air for minimizing engine vibrations, see the pressure-volume diagram in Figure 5. This is accomplished by operating the valves normally, disabling the fuel injection and increasing the intake pressure. Torque balancing is, however, only needed at low engine speeds. At higher engine speeds, it is inefficient to pump air with the deactivated cylinders, because this induces pumping losses in the intake system, and the heat losses increase during the high-pressure cycle. This system furthermore lacks any additional system, which can be used for further improvement of the fuel efficiency.

The ideal situation would be to implement a fully variably valve train of the type described in SAE960581. An engine, using this type of advanced valve train, would open up new possibilities, such as adaptive control of the valve motion in order to suit the current driver or a new environmental legislation, adjusting for different countries etc. Fully variable valve train systems are currently too expensive and energy consuming, but will probably be used in the future.

One problem involved in using cylinder deactivation is the switching between full and partial cylinder operation. In US-A-5 562 086, all transitions are performed during steady-state conditions, which almost never is the case for a passenger car engine. Furthermore, these transitions can be sensed by the driver as jerks and this must be avoided. This is a concern for all methods utilizing cylinder deactivation, see also US-A-5 492 100.

Deactivating some of the cylinders can have an impact on traditional catalysts. Traditional three-way catalysts must be kept at sufficiently high temperatures in order to work, and the exhausts must be configured for optimum efficiency, i.e. near stoichiometric conditions. The deactivated cylinders only pump air and/or EGR, or are totally shut off. This means that the catalyst(s) either will be polluted with oxygen, reducing NOₓ conversion, or cool off below the catalyst light-off temperature, rendering the catalyst(s) ineffective for all species.

### Summary of the invention

It is an object of the present invention to provide a method for controlling a four-stroke multi-cylinder spark ignition engine utilizing different types of cylinder deactivation, at low loads, depending on the engine operating condition, which mainly is determined by the engine speed and load.

The above object is achieved with a method for deactivation of a subgroup of cylinders while another subgroup is working, comprising the steps of: determining the engine torque, and if the engine torque is below a predetermined level, determining the engine operating condition, and if the engine is operating in an engine operating condition requiring balancing then deactivating a cylinder subgroup by disabling the corresponding fuel injector(s) and operating the inlet and exhaust valves with normal operation, where the intake pressure is adjusted to achieve stable torque output, or otherwise, deactivating a cylinder subgroup by disabling the corresponding fuel injector(s) and keeping the inlet and exhaust valves substantially closed during all four strokes.

The above-mentioned method can incorporate early or late inlet valve closing for the working cylinder subgroup to further reduce the pumping losses. In order to keep the cylinders warm, the working and deactivated cylinders can be cycled, so that the working cylinders are deactivated and vice versa. This also keeps the corresponding catalyst(s) above light-off temperature.

A lost motion valve control system can be used in the present invention for the above-mentioned disabling of the valves during cylinder-deactivated mode.

The transition between operating with two subgroups and operating with only one subgroup at low engine torque is achieved by decreasing the torque from one cylinder subgroup, while increasing the torque from the other cylinder subgroup. The total torque from the two subgroups must be regulated with regards to the input from the driver. When the torque of the first cylinder subgroup is below a certain predetermined level, the corresponding fuel injectors are switched off and the cylinder subgroup enters deactivated mode. The cylinder deactivation mode depends on the engine speed. This is a truth with modification, since it actually depends on the noise, vibration and harshness (NVH) of the engine. This characteristic is difficult to quantify, which means that each motor/vehicle configuration must be evaluated and a corresponding torque/speed chart must be derived. This is used to govern the choice of cylinder deactivation mode.

It is preferable if the transition between operating with two subgroups and operating with only one subgroup takes place during operation with a negative torque gradient, or during operation with a torque equal to or below zero. This will make the transition smoother and it will preferably not be detected by the driver.

The above-mentioned transition is effected by decreasing the inlet pressure in the deactivated cylinder subgroup, re-activating the corresponding fuel injectors and increasing the torque while decreasing the torque from the other cylinder subgroup. The total torque must be controlled to match the demand from the driver.

The first fired cycles of the re-activated cylinder subgroup are preferably operated with a large ignition delay and with a slightly rich mixture. The first reduces the formation of NOₓ in the re-activated cylinder subgroup and also renders hot exhausts. The surplus of fuel burns up in the catalyst(s), with the stored oxygen, and further contributes to the total warm-up of the catalyst(s).

Exhaust gas recirculation (EGR) can also be used for reducing the formation of NOₓ, where the EGR amount can be controlled by using a VVT mechanism.

A large ignition delay was used above for reducing the formation of NOₓ and for producing hot exhausts, but it can also be used for making the transition smoother. This results from the lower efficiency, and hence lower torque, of the late combustion.

It is a further object of the present invention to provide a system for implementing the above methods, where the system comprises a multi-cylinder spark ignition engine, an electronic control unit (ECU), a fuel injector, a spark plug, at least two throttles, controllers for the throttles, at least two chambers of an inlet manifold connected to said throttles and means for disabling the inlet and exhaust valves for at least one of the cylinders. A VVT mechanism can also be provided for partly controlling the load or the amount of EGR in the working cylinder subgroup.

The invention can be explained by examining a torque/speed diagram, see Fig. 6, which shows the regions of the different operating strategies. The limitations of each strategy can clearly be seen. The solid line corresponds to the standard engine supplying full load from the cylinders. This curve depends on the volumetric efficiency and it usually peaks at about 3000-4000 rpm. The dash dotted line corresponds to the engine operating with only half of the cylinders (denoted theoretical half torque). The dashed line with short dashes is the torque curve for a cylinder deactivated engine (half of the cylinders) using torque balancing and the dashed line with long dashes is the torque curve for a cylinder deactivated engine with disabled valves. It can clearly be seen that operation at low speeds is impossible with cylinder deactivation and disabled valves. This is due to the worse noise, vibration and harshness (NVH) of the engine in this mode. If cylinder deactivation is combined with torque balancing, it is possible to operate the engine down to idle, but only up to about half the theoretical torque. Above this torque, NVH is too bad. As mentioned above, these curves depend on the specific engine/vehicle combination so separate curves must be produced in each case.

### Brief description of the drawings

The invention will be described in further detail below with reference to the accompanying drawings, in which
Fig 1 is a pressure-volume diagram of a throttled engine, showing the pumping loss,
Fig 2 is a pressure-volume diagram, showing the effect of early inlet valve closing,
Fig 3 is a pressure-volume diagram showing the effect of late inlet valve closing,
Fig 4 is a pressure-volume diagram showing the effect of a totally disabled cylinder,
Fig 5 is a pressure-volume diagram for cylinder deactivation with torque balancing,
Fig 6 is a torque/speed graph showing the region for the different modes of operation,
Fig 7 is a plan view of a first embodiment of the invention, and
Fig 8 is a plan view of a second embodiment of the invention.

### Description of preferred embodiments,

In the technical background, references were made to Figs 1-5, wherein the pressure is plotted against the cylinder pressure for different operating strategies. For more information, see this section above.

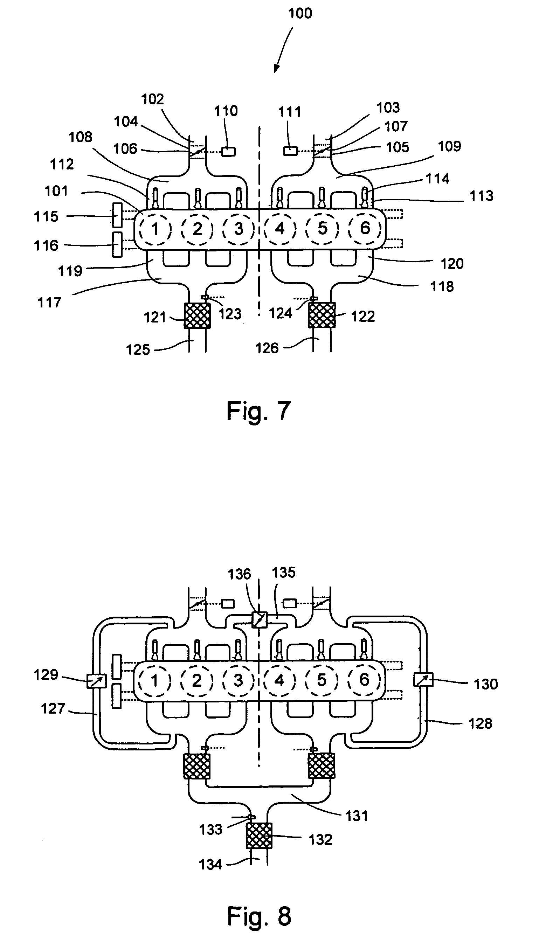

Fig 7 shows an engine 100, comprising an engine block 101, shown with six cylinders 1-6, with an intake side and an exhaust side. The cylinders can be divided into at least two subgroups, e.g. two groups of three cylinders. The intake side comprises at least two primary intake pipes 102, 103, at least two throttle housings 104, 105, each with a throttle 106, 107, and at least two intake manifolds 108, 109 connected to the engine block 101. The throttles 106, 107 are connected to separate controllers 110, 111, for changing the throttling of the intake air. The intake manifolds 108, 109 have intake runners 112, 113 for supplying the individual cylinders 1-6 with air and/or fuel.

The engine 100 is further equipped with fuel injectors 114, which may be located in the intake system, or directly inside the cylinders 1-6. The individual cylinders 1-6 are also equipped with spark plugs (not shown). The engine is equipped with a valve train 115, 116, for controlling the supply of air/fuel and discharge of exhausts. The shown embodiment can be fitted with a variable valve timing (VVT) mechanism (not explicitly shown), but this is not necessary for carrying out the invention. Furthermore, the engine can feature a lost motion valve system (not shown), for disabling the valves (not shown) of a select number of cylinders 1-6. Each cylinder 1-6 has an inlet valve and an exhaust valve.

On the exhaust side, the engine is fitted with exhaust manifold(s) 117, 118, comprising first exhaust pipe(s) 119, 120, a catalyst 121, 122, an oxygen sensor (lambda sensor) 123, 124, and second exhaust pipe(s) 125, 126. An exhaust gas recirculation (EGR) system can also be fitted between the exhaust manifold(s) and the intake manifold(s), see Fig. 8. This system comprises an EGR pipe 127, 128 and an EGR valve 129, 130. In Fig. 8, a downstream end of the catalyst 121, 122 is coupled to an exhaust junction 131, which in turn is coupled to a third catalyst 132. Shown is also a secondary oxygen sensor 133, which monitors the function of the first catalyst(s). In this case, the exhausts are expelled from a third exhaust pipe 134.

The intake manifolds 108, 109 may be equipped with interconnecting means 135, 136 for interconnecting plural manifolds. The interconnecting means comprise an interconnecting pipe 135 and an interconnecting valve 136. Below, the function of the involved parts will be described in more detail.

Air enters the engine 100 via the primary intake pipes 102, 103 and passes the throttles 106, 107 on its way to the intake manifolds 108, 109 and subsequently the cylinders 1-6. The throttles 106, 107 restrict the flow path of the air, and can in this way individually control the pressure in the corresponding intake manifold, given that the manifolds are not interconnected by the interconnecting means 135, 136. During normal operation, without cylinder deactivation, the throttles 106, 107 are controlled to achieve the same torque for the subgroups. The air then enters the intake manifolds 108, 109 and is delivered to the intake runners 112, 113.

Following combustion, the exhaust gases (or compressed and expanded air) are then delivered to the exhaust manifolds 117, 118, through the first exhaust pipes 119, 120. The exhaust gases then enter the first catalysts 121, 122. On its way, the exhaust gases pass by the oxygen sensors 123, 124, where feedback on the exhaust oxygen content is supplied to the engine management system (not shown). Some of the exhaust gases can be recirculated back to the intake manifold 108, 109 through the EGR system(s) 127-130. The engine operating condition is mainly determined by the engine speed and load but also by the air/fuel ratio, ignition timing, coolant temperature, intake air temperature, amount of residual gases, inlet and exhaust valve timing etc.

If a cylinder subgroup is deactivated, the corresponding discharged gases will be cool, compared to normal exhaust gases, and this will cool down the catalysts. In order to avoid this, the cylinder subgroup that is working is cycled between the subgroups, i.e. the subgroups are switched from working to deactivated and vice versa. This keeps all cylinders at a high temperature, and the catalysts are periodically warmed up above their light-off temperature. In order to further minimize the cooling down of the catalyst(s), the EGR system 127-130 is used for the deactivated side. This minimizes mass flow of cool exhaust gases through the catalysts 121, 122 and 132. If the cylinders are deactivated with disabled inlet and exhaust valves, and hence no mass flow through the exhaust pipes 117-120, 125, 126, the catalysts will still cool down and cycling will thus be necessary in this case as well.

If the valves for the deactivated cylinders are disabled, the valve timing can be altered for the entire cylinder bank, without effect for the deactivated cylinders. This can be used for implementing early/late inlet valve closing in combination with cylinder deactivation. The above functionality requires a fully variable valve train or a camshaft with a VVT mechanism in combination with a lost motion valve control.

### Details of the mode of operation

The engine according to the present invention functions like a normal four-stroke SI engine at high loads, as mentioned above. When the load decreases, the engine is operated with deactivation of some cylinders. This is accomplished by gradually reducing the inlet pressure in the cylinders to be deactivated. When the load is below a certain threshold, the fuel injectors 114 are turned off. The engine management system now calculates what kind of cylinder deactivation that is needed, depending on engine speed, vibrations, torque oscillations etc.

At high engine speeds, no torque balancing is required and the most efficient alternative can be chosen. For maximum efficiency, cylinder deactivation is accomplished by disabling the inlet and exhaust valves. This minimizes the mass flow through the deactivated cylinders, and hence the pumping losses, and it also minimizes the heat losses during the high-pressure cycle. The pressure trace for this strategy can be seen in Fig. 4. The mean pressure in the cylinder is governed by the time when the valves are disabled. However, the mean pressure quickly drops to 1 bar due to leaks over the piston rings.

At low engine speeds, the engine only has few working strokes per time unit, so a strategy with torque balancing is necessary. The inlet and exhaust valves are operated normally and the throttle 106, 107 is opened gradually until maximum stability is achieved.

When the engine speed increases or decreases, the change between the two strategies can occur almost instantaneously.

When the lost motion valve control is used, the camshafts 115, 116 can be controlled with the VVT mechanisms for achieving maximum efficiency in the working cylinders, as mentioned above. Early or late inlet valve closing can be used to further reduce the pumping losses. Early or late inlet valve closing can only give a moderate reduction in load, say down to about 4-5 bar IMEP,net, but this corresponds to a very low total load, as the other cylinders are deactivated.

In Figs. 6 and 7, it is assumed that the engine is an inline six cylinder engine. Such engines are generally equipped with one common camshaft for actuating the inlet valves of all the cylinders and one common camshaft for actuating the exhaust valves. It is also possible to implement the present invention in V-engines, where there are generally separate inlet and exhaust camshafts for each cylinder bank.

The switch from normal operation to cylinder-deactivated mode can be performed in different ways:

The switch from two cylinder subgroups to one cylinder subgroup preferably takes place during periods of very low torque, close to idle. It can also take place when the torque gradient is negative. This will only result in a faster engine brake, which will be hard for the driver to detect. It is also possible to switch during engine brake (negative torque). All the above solutions minimize the jerks that might arise during the transition.

The transition in the opposite direction, from one cylinder subgroup to two cylinder subgroups, takes place in a slightly different manner and is not so sensitive to jerks:

Before the re-activation of the deactivated subgroup, the throttles must be adjusted to obtain a sufficiently low inlet pressure. In the beginning of the transition, the ignition timing for the re-activated subgroup is delayed. This slightly reduces the torque from the combustion and gives a smoother transition. The re-activated cylinders are further operated with a rich mixture, but this is mainly to re-activate the catalysts quicker and this is described in more detail below.

The catalysts are controlled for obtaining minimal emissions of nitrogen oxides (NOₓ), carbon monoxide (CO) and unburned hydrocarbons (HC). This is achieved by having a separate first catalyst 121, 122 after each exhaust manifold 117, 118. Separate oxygen sensors 123, 124 monitor the air/fuel ratio for obtaining maximum conversion efficiency. A pipe junction 131 is positioned downstream of the first catalyst 121, 122, bringing the emissions from the same to the secondary catalyst 132. The emissions are preferably mixed prior to entering the secondary catalyst 132.

After a period of cylinder deactivation, the catalyst on the deactivated side has cooled down and has to be heated to reach light-off. This can be achieved by operating the re-activated cylinders with an excess of fuel and by introducing an ignition delay. The excess fuel will burn up with the surplus of oxygen, and rapidly heat up the catalyst and the ignition delay gives hotter exhausts. The ignition delay also reduces the maximum pressure in the cylinder, which also leads to a reduced maximum temperature in the cylinder. Since NOₓ generation is logarithmically dependent on the maximum in-cylinder temperature, this also greatly reduces the NOₓ emissions. As soon as the catalyst has reached its light-off temperature, the ignition setting is restored.

Possibly, a common catalyst can be used which is divided into two sections. Heat from the working side of the catalyst can then be transferred to the deactivated, cool side. In this way, the entire catalyst can be kept above operating temperature. If separate exhaust systems are used, heat can be transferred from the hot to the cool catalyst by some heat exchanging means.

## Claims

1. A method for controlling a four-stroke multi-cylinder spark ignition combustion engine by using cylinder deactivation of a subgroup of cylinders while another subgroup is working, during operation with an engine torque below a predetermined level, comprising the steps of:
determining the engine torque,
and when the engine torque is below the predetermined level,
determining an engine operating condition, and if the engine is operating in an engine operating condition at low engine speed requiring torque balancing,
deactivating a first cylinder subgroup by disabling the corresponding one or more fuel injectors (114) and operating the inlet and exhaust valves with normal operation, where the intake pressure is adjusted to achieve stable torque output,
or, if the engine is operating in an engine operating condition at high engine speed not requiring torque balancing,
deactivating a first cylinder subgroup by disabling the corresponding one or more fuel injectors (114) and keeping the inlet and exhaust valves substantially closed during all four strokes,
or, when the engine torque is no longer below the predetermined level, operate both cylinder subgroups according to normal spark-ignited operation.

2. A method according to claim 1, utilizing a variable valve timing (VVT) mechanism for achieving early inlet valve closing in the working cylinder subgroup and/or in the deactivated cylinder subgroup to further reduce the pumping losses.

3. A method according to claim 1, utilizing a VVT mechanism for achieving late inlet valve closing in the working cylinder subgroup and/or in the deactivated cylinder subgroup to further reduce the pumping losses.

4. A method according to claim 1, wherein the working and the deactivated cylinder subgroups are cycled, i.e. the working cylinder subgroup is deactivated and vice versa, for keeping all the cylinders warm and for preventing their corresponding catalyst(s) (121, 122) to cool down below the light-off temperature.

5. A method according to claim 1, wherein the lost motion valve control is used for disabling the inlet and exhaust valves for the deactivated cylinders during all four strokes.

6. A method according to claim 1, wherein a transition from operation with all cylinders to partial operation with less cylinders, using one of said methods of cylinder deactivation, comprises the steps of:
a. while the torque from the cylinder(s) to be deactivated is above a predetermined level,
I. decreasing the torque from the cylinder(s) to be deactivated,
II. increasing or maintaining the torque from the other cylinder(s), while controlling the total torque from the engine according to signals from the driver,
b. disabling fuel injection in the cylinder(s) to be deactivated,
c. closing the inlet and exhaust valves for deactivated cylinder(s), if no balancing is required, or else operating the valves normally and reducing the throttling, i.e. increasing the pressure in the inlet manifold (108, 109).

7. A method according to claim 6, wherein said transition occurs during operation with a negative torque gradient.

8. A method according to claim 6, wherein said transition occurs during operation with a torque equal to or below zero.

9. A method according to claim 1, wherein a transition from one of said methods of cylinder deactivation, with partial operation with one cylinder subgroup, to operation with two cylinder subgroups comprises the steps of:
a. decreasing the intake pressure for the cylinder subgroup to be re-activated and, if applicable, re-activating the valves,
b. re-activating the fuel injectors (114) for the cylinder subgroup to be re-activated,
c. while the torque from the at least two subgroups differ more than a predetermined value,
I. increasing the torque from the re-activated cylinder subgroup,
II. decreasing or maintaining the torque from the other cylinder subgroup, while maintaining the total torque from the engine according to the signals from the driver.

10. A method according to claim 9, wherein the first fired cycles, i.e. the first cycles with combustion, of the re-activated cylinder subgroup are operated with a relatively large ignition delay and with a slightly rich air/fuel mixture, in order to quickly restore the catalyst (121, 122, 132) to efficient operation.

11. A method according to claim 9, wherein exhaust gas recirculation (EGR) is used for lowering the maximum in-cylinder temperature and, hence, achieving a reduction of the NOₓ formation.

12. A method according to claim 11, wherein a variable valve train (WT) mechanism is used for controlling the amount of EGR and/or residual gas level.

13. A method according to claim 9, wherein the first fired engine cycles of the re-activated cylinder subgroup are operated with a large ignition delay, preferably between 15 to 25 crank angle degrees (CAD) after maximum brake torque (MBT) ignition timing, for essentially removing jerks in the torque.

14. A method according to claim 9, wherein said transition occurs when the operation approaches high levels of noise, vibration and harshness (NVH).

15. A method according to claim 9, wherein said transition occurs during operation with deteriorated fuel efficiency, e.g. caused by knock-induced ignition delay where the ignition is delayed more than 5 CAD from MBT ignition timing.

16. A system for implementing the method according to claim 1, comprising a multi-cylinder spark ignition combustion engine, specifically comprising:
an electronic control unit (ECU), gathering information from various sensors, such as a thermocouple, a tachometer, a pressure gauge, an oxygen sensor etc.,
a fuel injector (114) and at least two throttles (106, 107) with controllers (110, 111) for providing an air/fuel mixture as determined by the ECU,
at least two chambers of an inlet manifold (108, 109), connected to said throttles, and
means for disabling the inlet and exhaust valves for at least some of the cylinders.

17. A system according to claim 16, wherein the system comprises a VVT mechanism for partly controlling the load of the working cylinder subgroup and/or the deactivated cylinder subgroup.

18. A system according to claim 16, wherein the system comprises a VVT mechanism for controlling the amount of internal EGR within the working cylinder(s).

19. A system according to claim 16, wherein the means for disabling the inlet and exhaust valves for some of the cylinders is a mechanism with lost motion valve control.

## Patentansprüche

1. Verfahren zum Steuern einer mehrzylindrigen fremdgezündeten ViertaktBrennkraftmaschine unter Verwendung von Zylinderabschaltung einer Untergruppe von Zylindern, während eine andere Untergruppe arbeitet, während des Betriebs mit einem Motor-Drehmoment unter einem vorher festgelegten Pegel, aufweisend die Schritte:
Bestimmen des Motor-Drehmoments,
und, wenn das Motor-Drehmoment unterhalb des vorher festgelegten Pegels liegt,
Bestimmen einer Motor-Betriebsbedingung, und wenn der Motor in einer Motor-Betriebsbedingung bei niedriger, Drehmomentabgleich erfordernder Motor-Geschwindigkeit betrieben wird,
Abschalten einer ersten Zylinder-Untergruppe mittels Abschaltens der entsprechenden einen oder mehrerer Brennstoff-Einspritzdüsen (114) und Betreiben der Einlassventile und der Auslassventile im Normalbetrieb, wobei der Einlassdruck so eingestellt wird, dass ein stabiler Drehmomentausgang erzielt wird,
oder, wenn der Motor in einer Motor-Betriebsbedingung bei hoher, keinen Drehmomentabgleich erfordernder Motor-Geschwindigkeit betrieben wird,
Abschalten einer ersten Zylinder-Untergruppe mittels Abschaltens der entsprechenden einen oder mehrerer Brennstoff-Einspritzdüsen (114) und im Wesentlichen Verschlossenhalten der Einlassventile und der Auslassventile während aller vier Takte,
oder, wenn das Motor-Drehmoment nicht mehr unterhalb des vorher festgelegten Pegels liegt, Betreiben beider Zylinder-Untergruppen entsprechend normalem fremdgezündeten Betrieb.

2. Verfahren nach Anspruch 1 unter Verwendung eines Mechanismus zur variablen Ventilsteuerung (VVT) zum Erzielen von frühem Schließen der Einlassventile in der arbeitenden Zylinder-Untergruppe und/oder in der abgeschalteten Zylinder-Untergruppe zum weiteren Reduzieren von Pumpverlusten.

3. Verfahren nach Anspruch 1 unter Verwendung eines Mechanismus zur variablen Ventilsteuerung (VVT) zum Erzielen von spätem Schließen der Einlassventile in der arbeitenden Zylinder-Untergruppe und/oder in der abgeschalteten Zylinder-Untergruppe zum weitem Reduzieren von Pumpverlusten.

4. Verfahren nach Anspruch 1, wobei die arbeitende Zylinder-Untergruppe und die abgeschaltete Zylinder-Untergruppe zyklisch ein- und ausgeschaltet werden, d.h. die arbeitende Zylinder-Untergruppe wird abgeschaltet und umgekehrt, um alle Zylinder warm zu halten und um zu verhindern, dass ihre entsprechenden Katalysatoren (121, 122) auf Werte unterhalb der Anspringtemperatur abkühlen.

5. Verfahren nach Anspruch 1, wobei die Leerlauf-Ventilsteuerung zum Abschalten der Einlassventile und der Auslassventile für die abgeschalteten Zylinder während aller vier Takte verwendet wird.

6. Verfahren nach Anspruch 1, wobei ein Übergang vom Betrieb mit allen Zylindern zu Teilbetrieb mit weniger Zylindern unter Verwendung eines dieser Verfahren zur Zylinderabschaltung die Schritte aufweist:
a. während das Drehmoment des/der abzuschaltenden Zylinder(s) oberhalb eines vorher festgelegten Pegels liegt,
I. Verringern des Drehmoments des/der abzuschaltenden Zylinder(s),
II. Erhöhen oder Beibehalten des Drehmoments des/der anderen Zylinder(s), während das Gesamtdrehmoment des Motors entsprechend der Signale des Fahrers gesteuert wird,
b. Abschalten der Brennstoffeinspritzung in den/die abzuschaltenden Zylinder,
c. Schließen der Einlassventile und der Auslassventile für abgeschaltete Zylinder, wenn kein Abgleich notwendig ist, oder anderenfalls normales Betreiben der Ventile und Verringern der Drosselung, d.h. Erhöhen des Drucks im Ansaugrohr (108, 109).

7. Verfahren nach Anspruch 6, wobei dieser Übergang während des Betriebs mit einem negativen Drehmomentgradienten stattfindet.

8. Verfahren nach Anspruch 6, wobei dieser Übergang während des Betriebs mit einem Drehmoment gleich Null oder unter Null stattfindet.

9. Verfahren nach Anspruch 1, wobei ein Übergang von einem der genannten Verfahren zur Zylinderabschaltung mit Teilbetrieb mit einer Zylinder-Untergruppe zum Betrieb mit zwei Zylinder-Untergruppen die Schritte aufweist:
a. Verringern des Einlassdruckes für die zu reaktivierende Zylinder-Untergruppe, und, wenn anwendbar, Reaktivieren der Ventile,
b. Reaktivieren der Brennstoff-Einspritzdüsen (114) für die zu reaktivierende Zylinder-Untergruppe,
c. während das Drehmoment der mindestens zwei Untergruppen sich um mehr als einen vorher festgelegten Wert voneinander unterscheidet,
I. Erhöhen des Drehmoments der reaktivierten Zylinder-Untergruppe,
II. Verringern oder Beibehalten des Drehmoments der anderen Zylinder-Untergruppe, während das Gesamtdrehmoment des Motors entsprechend den Signalen vom Fahrer beibehalten wird.

10. Verfahren nach Anspruch 9, wobei die ersten Verbrennungszyklen, d.h. die ersten Zyklen mit Verbrennung, der reaktivierten Zylinder-Untergruppe mit einem relativ langen Zündverzug und mit einem leicht angereicherten Luft/Brennstoff-Gemisch betrieben werden, so dass der Katalysator (121, 122, 132) schnell wieder effizient betrieben werden kann.

11. Verfahren nach Anspruch 9, wobei Abgasrückführung (EGR) zum Verringern der maximalen Zylinder-Innentemperatur genutzt wird und somit eine Reduzierung der NOₓ-Bildung erzielt wird.

12. Verfahren nach Anspruch 11, wobei ein Mechanismus zur variablen Ventilsteuerung (VVT) zum Steuern der Abgasrückführungsmenge (EGR) und/oder des verbleibenden Gasniveaus verwendet wird.

13. Verfahren nach Anspruch 9, wobei die ersten gezündeten Zyklen der reaktivierten Zylinder-Untergruppe mit einem langen Zündverzug betrieben werden, vorzugsweise ein Zündzeitpunkt zwischen 15 und 25 Grad Kurbelwinkel (CAD) nach dem maximalen Bremsmoment (MBT), um im Wesentlichen Drehmomentstöße zu beseitigen.

14. Verfahren nach Anspruch 9, wobei dieser Übergang stattfindet, wenn der Betrieb hohe Pegel an Geräusch, Vibration und Rauhigkeit (NVH) erreicht.

15. Verfahren nach Anspruch 9, wobei dieser Übergang während des Betriebs mit verschlechterter Brennstoffeffizienz stattfindet, z.B. hervorgerufen durch Klopfinduzierten Zündverzug, wobei der Zündzeitpunkt des Zündens um mehr als 5 CAD nach MBT verzögert ist.

16. System zum Implementieren des Verfahrens nach Anspruch 1, aufweisend eine mehrzylindrige fremdgezündete Brennkraftmaschine, besonders aufweisend:
ein elektronisches Steuergerät (ECU), das Informationen von verschiedenen Sensoren bekommt, wie z.B. einem Thermoelement, einem Tachometer, einem Druckmessgerät,
einem Sauerstoffsensor etc.,
eine Brennstoff-Einspritzdüse (114) und mindestens zwei Drosselklappen (106, 107) mit Steuerungen (110, 111) zum Bereitstellen einer wie vom ECU ermittelten Luft/Brennstoff-Mischung,
mindestens zwei Kammern eines mit diesen Drosselklappen verbundenen Ansaugrohrs (108, 109), und
Mittel zum Blockieren der Einlassventile und der Auslassventile für mindestens einige der Zylinder.

17. System nach Anspruch 16, wobei das System einen VVT-Mechanismus zum teilweisen Kontrollieren der Last der arbeitenden Zylinder-Untergruppe und/oder der abgeschalteten Zylinder-Untergruppe aufweist.

18. System nach Anspruch 16, wobei das System einen VVT-Mechanismus zum Kontrollieren der Menge an internem EGR innerhalb des/der arbeitenden Zylinder(s) aufweist.

19. System nach Anspruch 16, wobei das Mittel zum Blockieren der Einlassventile und der Auslassventile für einige der Zylinder ein Mechanismus mit Leerlauf-Ventilsteuerung ist.

## Revendications

1. Procédé pour commander un moteur à quatre temps à combustion interne à plusieurs cylindres à allumage commandé par utilisation, pendant le fonctionnement, d'une désactivation de cylindres d'un sous-groupe de cylindres tandis qu'un autre sous-groupe travaille, un couple moteur étant en-deçà d'un niveau prédéterminé, comprenant les étapes :
de détermination du couple moteur,
et, lorsque le couple moteur est en deçà du niveau prédéterminé,
de détermination d'une condition de fonctionnement, et, si le moteur fonctionne selon une condition de fonctionnement de moteur à une vitesse lente de moteur nécessitant un équilibrage de couple,
de désactivation d'un premier sous-groupe de cylindres en invalidant un ou plusieurs injecteurs de carburant (114) et en actionnant les soupapes d'admission et d'échappement selon un fonctionnement normal, dans lequel la pression d'admission est réglée pour obtenir une sortie de couple stable,
ou bien, si le moteur fonctionne selon une condition de fonctionnement de moteur à une vitesse élevée de moteur ne nécessitant pas d'équilibrage de couple,
de désactivation d'un premier sous-groupe de cylindres en invalidant le ou les plusieurs injecteurs de carburant correspondants (114) et en maintenant les soupapes d'admission et d'échappement sensiblement fermées pendant les quatre temps,
ou bien, lorsque le couple moteur n'est plus en deçà du niveau prédéterminé, faire fonctionner les deux sous-groupes de cylindres selon un fonctionnement avec allumage commandé normal.

2. Procédé selon la revendication 1, dans lequel on utilise un mécanisme de commande variable de soupapes (VVT, pour Variable *Valve Timing*) pour obtenir une fermeture de soupapes d'admission avancée dans le sous-groupe de cylindres en travail et/ou dans le sous-groupe de cylindres désactivés afin de réduire davantage les pertes au changement de charge.

3. Procédé selon la revendication 1, dans lequel on utilise un mécanisme de commande variable de soupapes pour obtenir une fermeture de soupapes d'admission retardée dans le sous-groupe de cylindres en travail et/ou dans le sous-groupe de cylindres désactivés afin de réduire davantage les pertes au changement de charge.

4. Procédé selon la revendication 1, dans lequel les sous-groupes de cylindres en travail et désactivés suivent une séquence, c'est-à-dire que le sous-groupe de cylindres en travail est désactivé et vice versa, pour maintenir tous les cylindres chauds et pour empêcher que leur(s) catalyseur(s) correspondant(s) (121, 122) ne refroidissent en deçà de la température de réaction.

5. Procédé selon la revendication 1, dans lequel on utilise la commande de mouvement à vide de soupapes pour invalider les soupapes d'admission et d'échappement des cylindres désactivés pendant les quatre temps.

6. Procédé selon la revendication 1, dans lequel une transition d'un fonctionnement avec tous les cylindres à un fonctionnement partiel avec moins de cylindres, en utilisant l'un desdits procédés de désactivation de cylindres, comprend les étapes :
a. alors que le couple du ou des cylindres à désactiver est supérieur à un niveau prédéterminé,
I. de diminution du couple du ou des cylindres à désactiver,
II. d'augmentation ou de maintien du couple du ou des autres cylindres, tout en commandant le couple total du moteur en fonction de signaux provenant du conducteur,
b. de coupure de l'injection de carburant dans le ou les cylindres à désactiver,
c. de fermeture des soupapes d'admission et d'échappement du ou des cylindres désactivés, si aucun équilibrage n'est nécessaire, ou de mise en service autrement normalement des soupapes et de diminution de l'étranglement, c'est-à-dire d'augmentation de la pression dans le collecteur d'admission (108, 109).

7. Procédé selon la revendication 6, dans lequel ladite transition se fait pendant un fonctionnement avec un gradient de couple négatif.

8. Procédé selon la revendication 6, dans lequel ladite transition se fait pendant un fonctionnement avec un couple égal ou inférieur à zéro.

9. Procédé selon la revendication 1, dans lequel une transition de l'un desdits procédés de désactivation de cylindres, avec un fonctionnement partiel avec un sous-groupe de cylindres, à un fonctionnement avec deux sous-groupes de cylindres, comprend les étapes :
a. d'augmentation de la pression d'admission du groupe de cylindres à réactiver et, si cela peut être appliqué, de remise en service des soupapes,
b. de réactivation des injecteurs de carburant (114) du sous-groupe de cylindres à réactiver,
c. alors que le couple des au moins deux sous-groupes diffère de plus d'une valeur prédéterminée,
I. d'augmentation du couple du sous-groupe de cylindres réactivés,
II. de diminution ou de maintien du couple de l'autre sous-groupe de cylindres, tout en maintenant le couple total du moteur en fonction des signaux provenant du conducteur.

10. Procédé selon la revendication 9, dans lequel les premiers cycles d'explosion, c'est-à-dire les cycles avec combustion, du sous-groupe de cylindres réactivés sont programmés avec un retard d'allumage relativement important et avec un mélange air/carburant légèrement enrichi, pour ramener rapidement le catalyseur (121, 122, 132) à un fonctionnement efficace.

11. Procédé selon la revendication 9, dans lequel on utilise un recyclage des gaz d'échappement (EGR, pour *Exhaust Gas Recirculation*) pour abaisser la température maximale dans le cylindre et, de ce fait, obtenir une baisse de la formation de NOₓ.

12. Procédé selon la revendication 11, dans lequel on utilise un mécanisme de commande variable de soupapes (VVT) pour commander la quantité de recyclage des gaz d'échappement et/ou de niveau de gaz résiduels.

13. Procédé selon la revendication 9, dans lequel les premiers cycles d'explosion du moteur du sous-groupe de cylindres réactivés sont programmés avec un retard d'allumage important, de préférence compris entre 15 et 25 degrés d'angle de vilebrequin (CAD, pour *Crank Angle Degrees*) après un cadencement d'allumage de couple de freinage maximal (MBT, pour *Maximum Brake Torque*), pour éliminer essentiellement des saccades dans le couple.

14. Procédé selon la revendication 9, dans lequel ladite transition se fait lorsque le fonctionnement approche des niveaux élevés de bruit, de vibrations et de brutalité (NVH, pour *Noise, Vibration and Harshness*).

15. Procédé selon la revendication 9, dans lequel ladite transition se fait pendant un fonctionnement avec un rendement de carburant altéré, par exemple provoqué par un retard d'allumage induit par cognement dans lequel l'allumage est retardé de plus de 5 degrés d'ange de vilebrequin par rapport au cadencement d'allumage de couple de freinage maximal.

16. Système pour mettre en oeuvre le procédé selon la revendication 1, comprenant un moteur à combustion interne à plusieurs cylindres à allumage commandé, comprenant de façon plus précise :
un appareil de commande électronique (ECU, pour *Electronic Control* Unit), collectant de l'information provenant de divers capteurs, comme un thermocouple, un cinémomètre, une jauge de pression, un capteur d'oxygène, etc.
un injecteur de carburant (114) et au moins deux papillons (106, 107) dotés de dispositifs de commande (110, 111) servant à obtenir un mélange air-carburant tel que déterminé par l'appareil de commande électronique, au moins deux chambres d'un collecteur d'admission (108, 109), raccordées auxdits papillons, et
un moyen permettant d'invalider les soupapes d'admission et d'échappement d'au moins certains des cylindres.

17. Système selon la revendication 16, dans lequel le système comprend un mécanisme de commande variable de soupapes destiné à commander partiellement la charge du sous-groupe de cylindres en travail et/ou du sous-groupe de cylindres désactivés.

18. Système selon la revendication 16, dans lequel le système comprend un mécanisme de commande variable de soupapes destiné à commander la quantité de recyclage de gaz d'échappement interne à l'intérieur du ou des cylindres en travail.

19. Système selon la revendication 16, dans lequel le moyen destiné à invalider les soupapes d'admission et d'échappement de certains des cylindres est un mécanisme à commande de mouvement à vide de soupapes.
